Europäisches Patentamt

European Patent Office

Office européen des brevets

(19)

(11) Publication number: **0 580 249 A2**

## (12) EUROPEAN PATENT APPLICATION

(21) Application number: **93202137.1**

(22) Date of filing: **21.07.93**

(51) Int. Cl.5: **H04M 19/00**

(30) Priority: **24.07.92 IT MI921810**

(43) Date of publication of application:
**26.01.94 Bulletin 94/04**

(84) Designated Contracting States:
**DE FR GB NL SE**

(71) Applicant: **ITALTEL TELEMATICA S.p.A.**
**Via Appia - località Cappuccini**
**I-81055 Santa Maria Capua Vetere**
**(Caserta)(IT)**

(72) Inventor: **Del Bello, Vincenzo**
**Via Vanoni 56**
**I-23100 Sondrio(IT)**

(74) Representative: **Giustini, Delio**
**c/o Italtel Società Italiana**
**Telecomunicazioni s.p.a.**
**P.O. Box 10**
**I-20019 Settimo Milanese (MI) (IT)**

(54) **Method and device for the matching of the impedances of the subscriber termination and of the subscriber access to the characteristic impedance of the subscriber telephone line.**

(57) Device for the matching of the subscriber access impedance (Zau) as well as the subscriber termination impedance (Ztu) to the characteristic impedance (ZC) of the telephone line connecting the subscriber termination (TU) to the subscriber access (AU).

According to the invention it is possible to define the characteristic impedance of all twisted pair cables normally used in the telephone sector by multiplying the value of a characteristic impedance of a cable considered as a reference by a factor K. Moreover the invention takes advantage of the phase error generated on one branch of the line while mismatch is revealed on the other branch (bilinear transformation defined by the cable).

*Fig.7*

Technical Field

This invention relates generally to the telephone networks and in particular that part of the telephone network called subscriber system SU which includes the subscriber termination, the subscriber telephone line LT (twisted pair cable) and the subscriber access AU in the public telephone exchange terminal or in the private telephone exchange.

More precisely the invention regards a method and a device for the matching of the impedances of subscriber terminations and of subscriber accesses, respectively, to the subscriber telephone line: this matching is carried out by locking both line terminations on the characteristic impedance Zc of the telephone line itself.

The subscriber telephone line, set up by a pair of isolated conductors put in a cable of the Patterson type, shows an impedance of the capacitive type depending on:

- contructive parameters of the cable,
- the frequency,
- the lock impedance at the other termination,
- and moreover on the length of the cable if this last lock impedance does not coincide with the characteristic impedance of the cable itself. The conductors foreseen in the above mentioned telephone cables have diameters of 0,4- 0,5- 0,6- 0.7- 0,8 mm for which the specific values such as the resistance per km, the capacity per km, etc. are known. The characteristic impedance of a subscriber line is equal to:

$$Z_C = \sqrt{Z_{AP} \, Z_{CC}}$$

where $Z_{AP}$ = impedance of the unterminated (open) cable, $Z_{CC}$ = impedance of the locked cable in short circuit. This function of the transcendental type cannot be implemented by means of electric networks except by approximations.

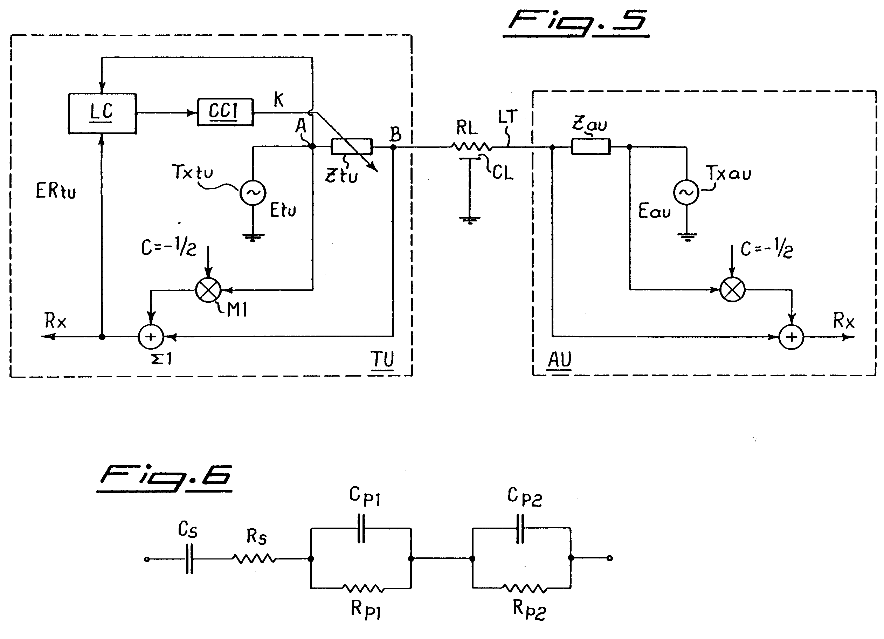

The characteristic impedance really used by the invention is obtained by the synthesis restraining the passage of the impedance of figure 4 for more than one point (example 3 points) in the complex plane assumed by the characteristic impedance of an artificial cable of 0.6 of diameter defined in document ETSI TR T/TE 10-05 December 6, 1989, 7th edition, according to the procedure described in the document: "Approximation problem of the subscriber telephone line characteristic impedance" by Vincenzo Del Bello Cotribution to: "BT2 workshop on harmonized impedance" held in Stuttgart (Germany) on April 9, 1992.

Background Art

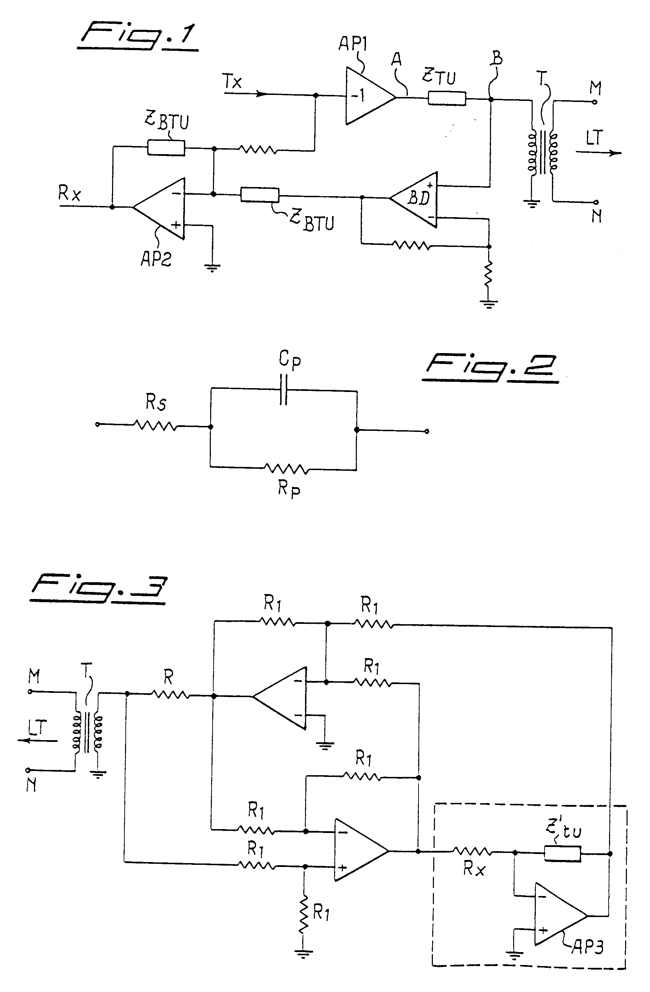

Now we refer to figure 1 where the theoretic scheme of a telephone hybrid of a known type usually used in subscriber accesses of public and private telephone exchanges and/ or in the subscriber terminations of the last generation. This hybrid is of the active subtractive type and includes a first operational amplifier AP1 with voltage generation function, a second operational amplifier AP2 with subtractive node functions and a galvanic decoupling transformer T. This hybrid includes moreover an internal impedance Ztu to the voltage generator so that the return loss measured between the points M and N as to a $Z_{RIF1}$ is smaller than a preset value and includes also one or two impedances $Z_{BTU}$ (subscriber termination balancing) in the degeneration network of the subtractive node so that the hybrid flyback, supposing a line impedance equivalent of $Z_{RIF2}$, will be very small. Between the transformer T and the impedence/s $Z_{BTU}$, a decoupling buffer BD is connected.

The use of two reference impedances, $Z_{RIF1}$ and $Z_{RIF2}$ one for the measuring/optimization of the return loss, and one for the measuring of the hybrid attenuation respectively, is an approach which can be considered overcome, as those must coincide and be equal to the characteristic impedance of the cable ($Z_{RIF1} = Z_{RIF2} = Zc$).

The lock of the subscriber lines on impedances which do not coincide with the characteristic impedance involves not little inconveniences like reflections and attenuations of not optimal hybride (local echo), which are extremely bad for the progressive use of the subscriber lines for the data transmission in voice band at always higher speeds (V.fast, videophone) and vocal applications such as hands free, etc.

Moreover the local mismatch creates negative effects even to the corresponding termination of the complete connection in terms of so called remote echo. The lock of the subscriber line (at both ends) on the proper characteristic impedance has never been pursued until today.

Only recently there was the proposal to lock the subscriber lines on an unified complex (or harmonized) impedance for all European countries and to use it also as a reference for the measuring of the attenuation of reflection as well as of the hybrid balancing. An example of this impedance is shown in figure 2 and includes a resistance Rs in series parallel to a capacity Cp and a resistance Rp.

However this proposal reduces only partially the indicated inconveniences as it is not able to simulate (synthesize) the characteristic impedance of the line as its polar pattern is a circle while the polar flow of the characteristic impedance is that of a bisecting line of the fourth quadrant of the complex plane.

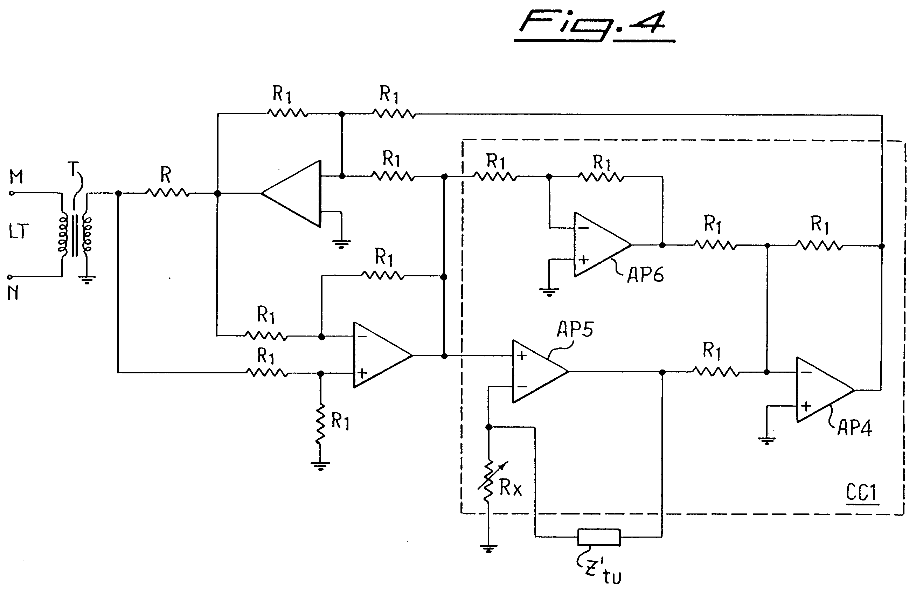

In figure 3 a pattern is shown - also this one is known - which is normally used to implement the impedance Ztu of the theoretic pattern of figure 1.

In particular according to this pattern:

$$Ztu = R + RH$$
$$H = Z'tu/Rx - 1$$
$$Ztu = R + R (Z'tu/Rx - 1) = Z'tu \; R/Rx = Z'tu \cdot K$$

Objects of the Invention

It is one object of this invention to determine a method and a device suitable to match the impedance of the subscriber termination and of the subscriber access for all above mentioned types of cables. According to the invention this aim is achieved by a circuit solution using the above mentioned value K which is made variable according to the invention. In particular such device varies automatically the lock impedance to match it to the characteristic subscriber line impedance with particular diameter, this device is prospected in the subscriber termination as well as eventually in the subscriber access.

Disclosure of Invention

In accordance with the present invention is therefore provided a device suitable to match the subscriber termination impedance with the characteristic telephone line impedance which connects the latter to the corresponding subscriber access in the exchange, and in this connection there is an impedance prospected which is equal to the characteristic impedance of said subscriber telephone line,
characterized in that it includes:
- a first generator of periodical reference signals connected at the end of the matching impedance opposed to that directed towards the subscriber telephone line;
- first multiplier means connected to said generator and to a constant coefficient;
- first adder means with one input connected to the output of said multiplier means and the other input connected to the end of the matching impedance directed towards the subscriber telephone line suitable to produce an error signal;
- a control logic for the time management of the above mentioned components which inputs are connected to the output of said first adder means and to the reference signal generator suitable to generate control signals K to vary the value of said matching impedance of the subscriber termination depending on said error signal.

According to the present invention is also provided a device to match the subscriber access impedance as well as the subscriber termination impedance to the characteristic impedance of the telephone line connecting the subscriber termination to the subscriber access, whereby there is initially in the subscriber access and in the subscriber termination an impedance different from the characteristic impedance of the subscriber telephone line,
characterized in that it includes in the subscriber access and in the subscriber termination:
- a second generator of periodical reference signals connected to the end of said matching impedance opposed to that directed towards the subscriber telephone line;
- second multiplier means connected to said generator and to a constant coefficient;
- second adder means with one input connected to the output of said multiplier means and the other input connected to the end of the matching impedance directed towards the subscriber telephone line suitable to produce an error signal;
- an phase error detector with the inputs connected to the heads of said impedance to be matched through the same number of comparator circuits;
- a control logic for the timed and programmed management of before mentioned components with the inputs connected to the output of the phase error detector, the output of said adder means and to said generator;

3

EP 0 580 249 A2

- a command unit connected to the output of said control logic and suitable to generate a control signal K to vary the value of said matching impedance.

Object of this invention is also a method for the matching of the impedance of a subscriber termination to the characteristic telephone line impedance which connects the latter to the corresponding subscriber access in the exchange, in this access is prospected an impedance equal to the characteristic impedance of said subscriber telephone line,

characterized in that it provides for the following operative phases:

a) emitting a first periodical reference signal, presenting a frequency (300 - 500 Hz) included in the low range of the voice band, along the subscriber telephone line;

b) measuring the level of said reference signal downstream from the matching impedance;

c) comparing this signal measured with a preset fraction of the reference signal in order to obtain an error signal turning out to be zero when the measured signal is equal to said preset fraction;

d) generating a control coefficient K to modify the value of the subscriber impedance dependent on said error signal until reducing it to zero.

An object of this invention is also a method for the automatic matching of the impedance provided for between a subscriber set and the telephone line connecting it to the corresponding subscriber access in the exchange, as well as of the impedance, provided for in the exchange, between the telephone line and the corresponding subscriber access,

characterized in that there are the following operative phases are provided:

a) emitting from the subscriber termination a second periodical reference signal, with a frequency (3000 - 3400 Hz) included in the upper range of the phonic band, along the subscriber telephone line controlling that the phase error connected to the subscriber set is equal to zero;

b) emitting from the subscriber termination the above mentioned first reference signal adjusting the coefficient K in such a way that the local error function is cancelled;

c) emitting from the subscriber access said second periodical reference signal along the subscriber telephone line controlling that the phase error in correspondence to the subscriber access is equal to zero;

d) emitting from the subscriber access said first reference signal adjusting the coefficient K in such a way that the local error function is cancelled.

Finally an object of this invention is a method for the automatic matching of the impedance provided for between a subscriber set and the telephone line connecting it to the corresponding subscriber access in the exchange, as well as of the impedance, provided for in the exchange, between the telephone line and the corresponding subscriber access,

characterized in that it provides the following operative phases:

a) emitting from the subscriber access said second reference signal along the subscriber telephone line controlling that the phase error connected to the subscriber access is different from zero;

b) emitting from the subscriber termination said second periodical reference signal along the subscriber telephone line controlling that the phase error connected to the subscriber termination is different from zero;

c) sending the second above mentioned periodical reference signal back from the subscriber access by varying the foreseen impedance in the subscriber termination until the measured phase error at the subscriber access is equal to zero and thus freeze the achieved subscriber terminal impedance value;

d) sending further said first periodical reference signal from the subscriber access adjusting the subscriber access impedance until the measured error amplitude at the subscriber access is cancelled.

In other words the invention provides for the variation of the characteristic impedance of the cable with a diameter equal to 0,6 mm adjusting it to that of the cables with different diameter through a scale parameter k, this is possible because of the fact that, in the complex plane, the characteristic impedance varies always along the bisector of the fourth quadrant and the multiplication one scaling K does not modify the impedance phase, but only the module.

Further advantageous characteristics are object of the depending claims.

Brief description of drawings

Now the invention will be illustrated with reference to the alleged drawings showing preferred but not restrictive realization forms of the invention, where:

the already described figures 1, 2 and 3 show the subscriber hybrid a complex impedance of the known type and a known solution for the emulation of the complex impedance;

figure 4 shows the circuit of figure 3 modified according to the invention;

4

figure 5 shows in a schematic way the circuit solution making it possible to implement the method at the base of this invention within a first case where the subscriber line is already adapted to the subscriber access;

figure 6 shows the structure of the characteristic impedance proposed in the contribution at ETSI as mentioned above; and

figure 7 shows schematically the circuit solution suitable to implement the method at the base of this invention within a second case where the subscriber line is not adapted neither on the subscriber access side nor on the subscriber termination side.

Detailed description of the preferred embodiment

With reference to the drawings, figure 5 shows schematically an embodiment of the invention supposing that the impedance Zau in the exchange has been chosen exactly equal within the band 300 - 3400 Hz at the characteristic line impedance LT while the algorithm as object of this invention, provided for in the subscriber termination, seeks automatically the optimal matching. The pattern is not balanced but earthened for simplicity reasons. Further on we will moreover refer to a subscriber telephone set, however the invention is in a more general way applied to the line interface of a generic subscriber termination TU.

The subscriber telephone line is schematically represented by a resistance RL and a distributed capacitance CL.

In the telephone exchange the subscriber access provides for a matching impedance Zau which we suppose in this first case, as said before, to be equal to the characteristic impedance Zc of the subscriber telephone line.

In the embodiment illustrated in figure 5 the device according to the invention provides in the subscriber termination for a generator Txtu - with internal impedance Ztu variable according to this invention - suitable to issue periodical reference signals ETU on the subscriber telephone line, for example a sinusoidal signal with a frequency (300 - 500 Hz) included in the low range of the voice band to cancel the module error. This emission occurs preferably or during the break between the sound impulse inviting for dialling issued by the subscriber access, or, if the subscriber set is the called one, immediately after the response.

The impedance Ztu which is the matching impedance normally present in the subscriber termination is realized according to the invention, as an impedance made variable modifying a coefficient k of the graduated type generated by a circuit CC1 connected to a logic control bloc LC which correlates the sign of Etu with the sign of ERtu. With K = 1 Ztu coincides with the characteristic impedance of the cable of a diameter equal to 0,6 mm.

The algorithm followed by the circuit LC to define the value of K is:

if ERtu > 0 and Etu > 0 achieves K < 1
if ERtu < 0 and Etu > 0 achieves K > 1

or

if ERtu > 0 and Etu < 0 achieves K > 1
if ERtu < 0 and Etu < 0 achieved K < 1

Figure 4 shows the evolution of the pattern of figure 3 where the units Rx, Z'tu and AP3 have been replaced by the block CC1 which coincides with the command unit CC1 of figure 5.

In particular the unit CC1 includes an operational amplifier AP4 with adder function for two signals coming from a non inverting further amplifier AP5 and AP6 of unitary gain and invert respectively, the whole inserted in the degeneration ring of the emulation circuit of the impedance. The resistances marked by R1 have all the same value in order to obtain a unitary gain while the resistance R and Rx have a value different from the resistance R1 as it has an influence on the determination of the value of K ($K = R/Rx$).

The relations reported below give the mathematic justification of the fact that the terminal impedance depends on the factor K which is variable through an earthened resistance.

$$Ztu = R + RH$$
$$H = [(Z'tu/Rx + 1) - 1] - 1 = Z'tu/Rx - 1$$
$$Ztu = R + R (Z'tu/Rx - 1) = Z'tu \, R/Rx = Z'tu \, K$$

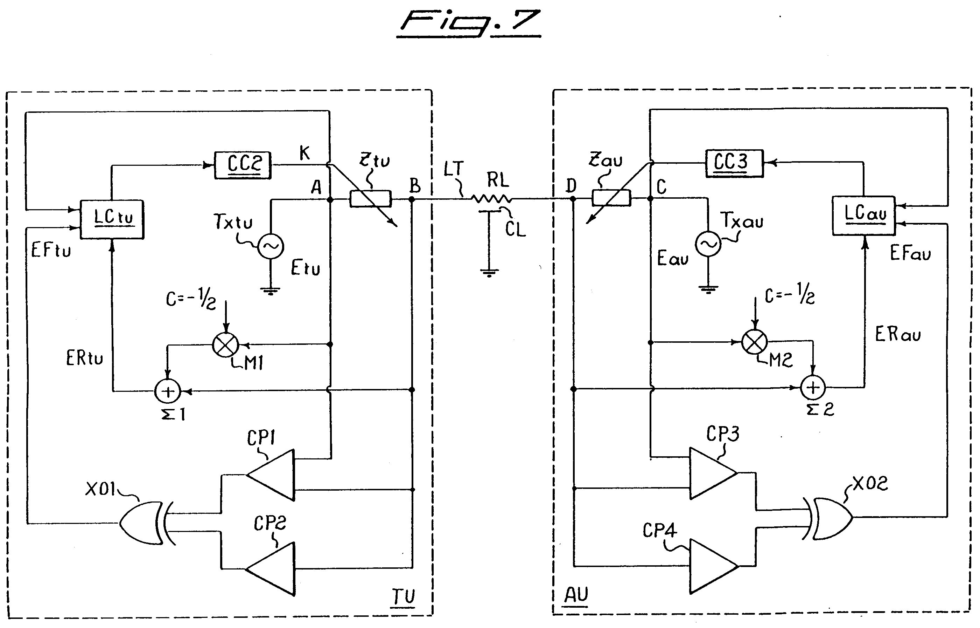

The starting value of the Ztu being equal to that relative to the characteristic impedance of a cable of 0,6mm. The representative network of the impedance Ztu is shown in figure 6. This includes three cells in series, the first set up by the capacitor Cs and by the resistance Rs in series, and the other two by the parallel of Cp1 and Rp1, and of Cp2 and Rp2 respectively; the genesis of this impedance is reported in the contribution at ETSI as mentioned above. The value resulting from the impedance is function of a parameter k suitable to realize a scale variation operation or it can be expressed as k.Ztu as already described with reference to the unit CC1 of figure 4 in the sketched part.

Always referring to figure 5 the device according to the invention includes moreover a first multiplier M1 with one input connected to the point A and the other input to a multiplier coefficient C equal to -1/2, so that the output of the multiplier turns out equal to -Etu/2. The output of the multiplier M1 is connected to an adder $\Sigma1$ which receives on the other input the signal coming from point B of the subscriber termination, downstream from the matching impedance Ztu.

The generator Txtu emits the signal Etu with the modality indicated before along the subscriber telephone line LT. As the subscriber telephone line is locked at the other end on the proper characteristic impedance, in point B there will be a signal in phase with Etu while its module will be equal to +Etu/2 only if also Ztu is equal to the characteristic impedance Zc.

In the contrary case at the output of the adder $\Sigma1$ there will be an error signal ERtu different from zero with Etu piloting through LC the unit CC1 making a variation of the control coefficient k (later on table 2 will be shown deducted from table 1 by applying suitable multiplier values of K to the respective Zc to a cable diameter equal to 0,6mm) which at its turn modifies the subscriber impedance value Ztu until reaching the equality, that is the situation ERtu=0. At this point the circuit LC disables the issue of the tone at said frequency (300 - 500 Hz) includes in the low range of the voice band and the value of the impedance ZTu remains fix at the value of the characteristic impedance Zc of the subscriber telephone line.

In the case in which neither Ztu nor Zau are equal to the characteristic impedance of the line LT, the device according to the invention will be installed as well in the subscriber termination TU as in the subscriber access AU as shown in figure 7 where, for simplicity reasons, the same references are used for the indication of components identical or substantially equivalent to those illustrated in figure 5.

In this case we find in the subscriber termination TU the same components M1, Ztu and $\Sigma1$, the latter producing at the output an error ERtu, and moreover two comparator circuits CP1 and CP2 connected to the points A and B respectively (end of the impedance Ztu). In particular CP1 is connected in differential mode, i.e. is connected to the points A and B where CP2 is connected to point B.

The outputs of the comparators CP1 and CP2 are brought to the inputs of a logic gate of the OR type except XO1 which output represents the phase error Eftu. A circuit LCtu receives in input the signals Eftu, ERtu and Etu and produces through CC2 in output as a result a value k which modifies the impedance value Ztu.

An analogous arrangement is provided for in the subscriber access AU and comprises the adjustable impedance Zau, a generator Txau, a multiplier M2 for a constant C (equal to- 1/2), an adder $\Sigma2$, two comparators CP3 and CP4, (CP3 is connected in differential mode) a logic gate of the OR type exclusive XO2 and a circuit LCau receiving in input the phase error signals EFau, ERau and Eau and through produces through CC3 in output a signal k suitable for the variation of the impedance Zau until the wanted value is obtained.

For what regards the adjustment method according to the invention it is necessary to distinguish two cases.

If the line is very long (in theory endless) it always has its characteristic impedance, independently from the termination on which it is locked at the other end.

Under these conditions the transmitter Txau of the subscriber access emits a periodical reference signal (for example the tone at 3000-3400 Hz) and the control logic LCau checks that the phase error EFau is zero, after that it provides for the variation of k until the error ERau will be zero. In the following interval the generator Txtu of the subscriber set emits the tone at 300 - 500 Hz and the control logic LCtu of the subscriber set performs the same operations mentioned above.

In the contrary case where the line LT is not very long and therefore its impedance is not independent of the termination impedance, the generator Txau of the subscriber access emits first of all the exchange tone at 3000 - 3400 Hz and the logic LCau checks that the phase error EFau is different from zero.

During the following interval the control logic LCtu in the subscriber set finds out that Eftu is different from zero and the generator Txtu of the subscriber set Tu emits the same tone at 3000 - 3400 Hz. The circuit CC3 in the subscriber access AU starts to modify the coefficient k until the phase error found in the subscriber termination TU (from the control logic LCtu)is zero. The here described procedure foresees, that the TU must be a pilot termination, but nothing forbids the situation to be inverted and that the AU will pilot.

6

At this point the subscriber set ceases to emit the tone at 3000 - 3400 Hz and after that the subscriber access freezes the obtained value k.

After this, having obtained a condition where the impedance in the exchange is equal to the characteristic one, that means Zau = Zc, the generator Txtu of the subscriber set starts again emitting the tone at 300-500 Hz to optimize the own value k by the modalities already illustrated for the case Zau = Zc.

In mathematic terms this condition occurs when Zau coincides with the united point of the bilinear transformation defined by the presence of the line at the frequency of 3000 - 3400 Hz.

In the following table 1 the values of the electric parameters of the characteristic impedances, relative to the duplex cable of different diameter synthesized according to figure 6 applying a procedure described in the above mentioned contribution at ETSI, are summarized.

Table 1

| φ | RS | Cs | Rp1 | Cs1 | Rp2 | Cp2 |
|------|------|------|------|------|------|------|
| mm | ohm | uF | ohm | nF | ohm | nF |
| 0.4 | 226 | 0.795 | 410 | 164.3 | 1097 | 414.2 |
| 0.5 | 167.7 | 1.05 | 306.5 | 218.9 | 819.4 | 553.2 |
| 0.6 | 146.1 | 1.22 | 268.1 | 252 | 718.5 | 635 | <----Ref |
| 0.7 | 136.8 | 1.29 | 254 | 265.4 | 675.2 | 674.5 |
| 0.8 | 119.9 | 1.466 | 232.2 | 299.4 | 595.6 | 760.5 |

In the following table 2 the values of the electric parameters of the characteristic impedances, relative to a duplex cable obtained by multiplying the characteristic impedance parameters of the 0,6mm cable, are summarized.

$K = Rs\phi/Rsref$

$Rs\phi = Rsref \cdot K\phi$

$CS\phi = Csref/K\phi$

$Rp1\phi - Rp1ref.k\phi$

$Cp1\phi = Cp1ref/K\phi$

$Rp2\phi = Rp2ref \cdot K\phi$

$Cp2\phi = Cp2ref/K\phi$

Table 2

| φ | RS | Cs | Rp1 | Cs1 | Rp2 | Cs2 | K | |
|---|---|---|---|---|---|---|---|---|
| mm | ohm | uF | ohm | nF | ohm | nF | | |
| 0.4 | 226 | 0.788 | 415 | 162.8 | 1111.4 | 410 | 1.55 | |
| 0.5 | 167.7 | 1.06 | 307.9 | 219.4 | 825.3 | 552.8 | 1.15 | |
| 0.6 | 146.1 | 1.22 | 268.1 | 252 | 718.5 | 635 | 1 | <-Ref |
| 0.7 | 136.8 | 1.3 | 250.6 | 269.6 | 671.5 | 679.4 | 0.93 | |
| 0.8 | 119.9 | 1.489 | 220 | 307 | 589.7 | 473.6 | 0.82 | |

The values K reported in Table 2 are the values which the algorithms previously described will select at the end of the adjustment phase.

It will be understood by those skilled in the art that with a matching of the impedences of subscriber terminations and of subscriber accesses, respectively to the impedences of the telephone line it is possible to prevent the reflexions of the useful signals and render unnecessary the use of echo cancellers.

It will furthermore be understood by those skilled in the art that various modifications and changes may be made to the present invention without departing from the spirit and scope thereof. For example a combination of the device according to the present invention and echo cancellers may be made without departing from the spirit of the invention.

## Claims

1. Device for the adjustment of a subscriber termination impedance to the characteristic impedance of the telephone line (LT) connecting the latter to the corresponding subscriber access in the exchange; in this access an impedance (Zau) equal to the characteristic impedance (Zc) of said subscriber telephone line is programmed,
    characterized in that
    - a first generator (Txau) of periodical reference signals (Etu) connected to the end (A) of the matching impedance (Ztu) opposed to that directed towards the subscriber telephone line (LT);
    - first multiplier means (M1) connected to said generator (Tx) and to a constant coefficient (C);
    - first adder means (Σ1) having one input connected to the output of said multiplier means (M1) and the other input connected to the end (B) of the matching impedance (Ztu) in the direction of the subscriber telephone line, suitable to produce an error signal ERtu;
    - a control logic (LC) for the timed and programmed control of the above mentioned components, which inputs are connected to the output of said first adder means (Σ1) and to the reference signal generator (Etu), suitable to generate a control signal K to modify the value of said matching impedance (Ztu) depending on said error signal (ERtu).

2. Device for the adjustment of the subscriber access impedance (Zau) as well as that of the subscriber termination (Ztu) to the characteristic impedance (Zc) of the telephone line (LT) connecting the subscriber termination (TU) to the subscriber access (AU), in this subscriber termination there is initially an impedance (Zau) and (Ztu) different from the characteristic impedance (Zc) of the subscriber telephone line,
    characterized in that it includes in the subscriber access (AU) and in the subscriber termination (TU), respectively:
    - a second generator (Txau and Txtu, respectively) of periodical reference signals (Eau and Etu, respectively) connected to the end (C and A, respectively) of said matching impedance (Zau and Ztu, respectively) opposed to that in the direction of the subscriber telephone line (LT);

- second multiplier means (M2 and M1, respectively) connected to said generator (Txau and Txtu, respectively) and to a constant coefficient (C);
- second adder means ($\Sigma 2$ and $\Sigma 1$, respectively) having one input connected to said output of said multiplier means (M2 and M1, respectively) and the other input connected to the end (D and B, respectively) of the adjustment impedance (Zau and Ztu, respectively) directed towards the subscriber telephone line (LT), suitable to produce an error signal (ERau and ERtu, respectively);
- a phase error detector (XO2 and X01, respectively) having the inputs connected to the heads of said impedance to be adjusted (Zau and Ztu, respectively) through the same number of comparator circuits (CP3, CP4 and CP1, CP2), respectively, two of them (CP1, CP3) being connected in differential mode;
- a control logic (LCau and LCtu, respectively) for the timed and programmed control of the above mentioned components having the inputs connected to the output of the phase error detector (XO2 and XO1, respectively), to the output of said adder means ($\Sigma 2$ and $\Sigma 1$, respectively) as well as to said generator (Txau and Txtu, respectively);

a command unit (CC3 and CC2, respectively) connected to the output of said control logic (LCau and LCtu, respectively) and suitable to generate a control signal (k) to modify the value of said matching impedance (Zau).

3. Device as in claims 1 and 2 characterized in that said control unit (CC) includes a first operational amplifier (AP4) with adder function of two signals arriving from a second operational not inverting amplifier (AP5) and from a third operational inverting amplifier (AP6) of unitary gain.

4. Method for the adjustment of the impedance (Ztu) of a subscriber termination to the characteristic impedance of the telephone line connecting the latter to the corresponding subscriber access in the exchange, in this access there is a programmed impedance (Zau) which is equal to the characteristic impedance (Zc) of said subscriber telephone line (LT),

characterized in that there are the following operative phases programmed:

a) emitting a first periodical reference signal (Etu) with a frequency (300 - 500 Hz) includes in the low range of the voice band (3000 - 3400 Hz) along the subscriber telephone line;

b) measuring the level of said reference signal downstream from the matching impedance (Ztu);

c) comparing this measured signal with a preset fraction of the reference signal (Etu) to find out the error signal (Ertu) turning out zero when the measured signal is equal to said preset fraction;

d) generating a control coefficient (k) to modify the subscriber impedance value (Ztu) depending on said error signal (ERtu) until putting it to zero.

5. Method for the automatic adjustment of the adjustable impedance (Ztu) provided for between a subscriber set and the telephone line (LT) connecting it to the corresponding subscriber access (AU) in the exchange as well as to the adjustable impedance (Zau), provided for in the exchange, between the telephone line (LT) and the corresponding subscriber access (AU),

characterized in that the following operative phases are scheduled:

a) emitting from the subscriber termination a second periodical reference signal (Etu) with a frequency (3000 - 3400 Hz) included in the high range of the voice band along the subscriber telephone line (LT) controlling that the phase error (EFtu) connected with the subscriber set (TU) is equal to zero;

b) emitting from the subscriber termination (TU) said first reference signal (300 - 500 Hz) adjusting the coefficient K in such a way that the local error function is cancelled;

c) emitting from the subscriber access (AU) said second periodical reference signal (Eau) along the subscriber telephone line (LT) controlling that the phase error (EFau) connected to the subscriber access (AU) is equal to zero;

d) emitting from the subscriber access (AU) the above mentioned first reference signal (300-500 Hz) adjusting the coefficient K in such a way that the local error function is cancelled.

6. Method for the automatic adjustment of the adjustable impedance (Ztu) foreseen in the subscriber termination along the telephone line (LT) connecting it to the corresponding subscriber access(AU) in the exchange as well as of the adjustable impedance (Zau) provided for in the exchange between the telephone line (LT) and the corresponding subscriber access (AU),

characterized in that the following operative phases are programmed:

a) emitting from the subscriber access (AU) said second periodical reference signal (Eau) along the subscriber telephone line (LT) checking that the phase error (EFau) connected to the subscriber access (AU) is different from zero;

emitting from the subscriber termination (TU) said second periodical reference signal (Etu) along the subscriber telephone line (LT) checking that the phase error (EFtu) connected to the subscriber termination (TU) is different to zero;

c) sending back from the subscriber access (AU) the above mentioned periodical reference signal (Eau) modifying the impedance provided for in the subscriber termination (Ztu) until the phase error measured at the subscriber access will be cancelled (EFau = 0), and therefore freeze the obtained subscriber termination impedance value;

d) emitting further from the subscriber access(AU) the above mentioned first periodical reference signal adjusting the programmed impedance in the subscriber access until the amplitude error measured at the subscriber access (Erau) will be cancelled.

7. Method according to claims 4, 5 and 6 characterized in that said predetermined fraction is equal to 1/2.

8. Method according to claims 4, 5 and 6 characterized in that the above mentioned periodical reference signals have a frequency included between 300 and 3400 Hz.

Fig.1

Fig.2

Fig.3

_Fig.4_

EP 0 580 249 A2

_Fig.5_

_Fig.6_

EP 0 580 249 A2

Fig.7